# EUROPÄISCHE PATENTSCHRIFT

(11) **EP 0 457 323 B1**
(45) Veröffentlichungstag und Bekanntmachung des Hinweises auf die Patenterteilung: **03.08.1994**
(21) Anmeldenummer: 91107951.5
(22) Anmeldetag: 16.05.1991
(51) Int. Cl.: G01B 7/04, G01B 5/04, D04B 27/22

(54) **Vorrichtung zur digitalen Messung der Fadenlänge der von einem Kettbaum einer Kettenwirkmaschine abgezogenen Fäden**
Device for digital measuring the string yarn length from a warp beam of a warp knitting machine
Dispositif pour la mesure numérique des longueurs de fil tiré par l'ensouple de tissage d'un métier à mailles

(30) Priorität: 16.05.1990 DE 4015784
(43) Veröffentlichungstag der Anmeldung: 21.11.1991
(73) Patentinhaber: LIBA Maschinenfabrik GmbH, D-95119 Naila (DE)
(72) Erfinder: Wirth, Rudi, 8678 Schwarzenbach (DE)
(74) Vertreter: Bardehle, Heinz, Dipl.-Ing.

(56) Entgegenhaltungen:
- DD-A- 88 664
- DE-A- 2 307 152
- DE-A- 2 324 698
- DE-A- 2 536 082
- DE-A- 3 900 296

## Beschreibung

Die Erfindung bezieht sich auf eine Vorrichtung gemäß dem Oberbegriff des Anspruchs 1.

Eine derartige Vorrichtung ist aus der DE-OS 23 07 152 bekannt. Bei der bekannten Vorrichtung treibt die am Kettbaum anliegende Andrückrolle direkt einen Tachogenerator, der damit ein den abgezogenen Fäden entsprechendes Signal erzeugt. Bei dem Tachogenerator kann es sich auch um einen digitalen Meßwertgeber, also um einen Impulsgenerator handeln, dessen Impulse hinsichtlich ihres Abstandes ein Maß für die jeweils abgegebene Fadenlänge ist. Um dabei infolge Anliegens der Andrückrolle Beschädigungen der auf dem Kettbaum aufgewickelten Fäden zu vermeiden, wird üblicherweise als Material für die Andrückrolle relativ weiches Gummi verwendet.

Es ist weiterhin aus der DE-OS 23 51 431 bekannt, die Impulse (Fadenlängen-Impulse), die von dem von der Andrückrolle angetriebenen Impulsgenerator abgegeben werden, mit einem vorgegebenen Impulszug zu vergleichen, um aus dem Vergleich ein Maß für die Steuerung der Drehung des Kettbaumes abzuleiten. Auch bei der betreffenden bekannten Vorrichtung dient die Andrückrolle zum direkten Antrieb des Impulsgenerators.

Der Erfindung liegt die Aufgabe zugrunde, den Antrieb des über die Andrückrolle angetriebenen Impulsgenerators so zu gestalten, daß über praktisch beliebig lange Betriebszeiten ein sehr genauer Antrieb des Impulsgenerators gewährleistet ist und die vom Impulsgenerator abgegebenen Fadenlängen-Impulse eine genaue Steuerung der Drehung des Kettbaumes ermöglichen.

Erfindungsgemäß geschieht dies durch die im Patentanspruch 1 angegebenen Maßnahmen.

Die Gestaltung des Antriebs des Impulsgenerators unter Ausnutzung der Andrückrolle als Zwischenrolle, die dann schlupffrei die den Impulsgenerator direkt antreibende Antriebsrolle mitnimmt, macht die Drehung der Antriebsrolle und damit des Impulsgenerators in bezug auf den tatsächlichen Fadenabzug frei vom Durchmesser der Andrückrolle und deren eventuellen Ungenauigkeiten, insbesondere also von deren Abnutzung, und läßt in vorteilhafter Weise eine Herstellung der Antriebsrolle zu, bei der diese einerseits mit verschleißfreier Oberfläche und andererseits mit einem vorgegebenen Durchmesser gefertigt werden kann, der darauf Rücksicht nimmt, daß die von der Antriebsrolle mittels des Impulsgenerators erzeugten Fadenlängen-Impulse, die je eine bestimmte Fadenlänge repräsentieren, so dicht aufeinander folgen, daß sich damit für die weitere Verarbeitung der Fadenlängen-Impulse eine Aufteilung in Längenabschnitte der abgezogenen Fäden ergibt, die mit hoher und ausreichender Genauigkeit auf den jeweils durch die betreffenden Legung bzw. Musterung erforderlichen Fadenverbrauch Rücksicht nimmt. Die Antriebsrolle, die ja wegen der Ausnutzung der Andrückrolle als Zwischenrolle nicht am Kettbaum anliegt, kann ohne weiteres aus einem eine harte Oberfläche aufweisenden Material gefertigt werden, wobei hinsichtlich des Durchmessers der Antriebsrolle eine hohe Genauigkeit eingehalten werden kann, so daß sich über praktisch beliebig lange Betriebszeiträume ein verschleißfreies Arbeiten der Antriebsrolle mit gieichbleibendem Durchmesser und damit gieichbleibender Genauigkeit der Fadenlängensteuerung ergibt. Es spielt dabei keine Rolle, ob die Andrückrolle dabei einem Verschleiß unterliegt, da diese als Zwischenrolle auch bei infolge Verschleißes kleiner werdendem Durchmesser im Falle schlupffreier Mitnahme jeweils exakt die vom Kettbaum abgezogene Fadenlänge auf die Antriebsrolle überträgt, so daß sich also ein über große Betriebszeiträume störungsfreies und mit hoher Genauigkeit gleichmäßiges Arbeiten der Vorrichtung ergibt.

Um bei dieser Vorrichtung eine Betriebsstörung zu vermeiden, die sich durch ein unerwünschtes Abheben der Andrückrolle vom Kettbaum ergeben würde (bei weiterlaufender Kettenwirkmaschine würde die weitere Fadenzufuhr von dem Kettbaum gestört sein), gestaltet man die Vorrichtung zweckmäßig so, daß die Andrückrolle auf einem an einem Schwenkarm angelenkten, in Richtung auf den Kettbaum vorgespannten, Hebel derart gelagert ist, daß die Andrückrolle in ihrem angedrückten Zustand den Hebel vom Kettbaum weg und in ihrem abgehobenen Zustand den Hebel auf den Kettbaum zu verdreht, wobei ein am Schwenkarm angebrachter Endschalter - vom Hebel betätigt - im angedrückten Zustand seine eine Schaltstellung (z. B. geschlossen) und im abgehobenen Zustand seine andere Schaltstellung (z. B. geöffnet) einnimmt, in die der Endschalter beim Wegschwenken des Schwenkarmes vom Kettbaum weg während der Drehbewegung des Hebels bei noch am Kettbaum anliegender Andrückrolle gelangt.

Ein ungewolltes oder unerwünschtes Wegschwenken des Schwenkarmes führt damit vor dem Abheben der Andrückrolle vom Wickel des Kettbaumes zu einer Betätigung des Endschalters aufgrund der bei Beginn der Schwenkbewegung ausgelösten Drehbewegung des Hebels, wodurch der Endschalter z. B. geöffnet werden kann, womit sich die Kettenwirkmaschine noch vor dem erwähnten Abheben abschalten läßt. Hierdurch wird eine Fehlsteuerung der Kettenwirkmaschine unmöglich gemacht.

In den Figuren ist ein Ausführungsbeispiel der Erfindung dargestellt. Es zeigen:
- Figur 1: eine Kettenwirkmaschine in prinzipieller Darstellung mit Kettbaum und Andrückrolle, wobei aus Gründen der Vereinfachung der Zeichnung die Wirkwerkzeuge weggelassen sind,
- Figur 2: in Seitenansicht den Kettbaum mit Andrückrolle in der Betriebslage,
- Figur 3: die gleiche Vorrichtung mit noch am Kettbaum anliegender Andrückrolle, jedoch teilweise verschwenktem Schwenkarm (Abschaltlage),
- Figur 4: die gleiche Vorrichtung mit vom Kettbaum abgehobener Andrückrolle (Außerbetriebslage).

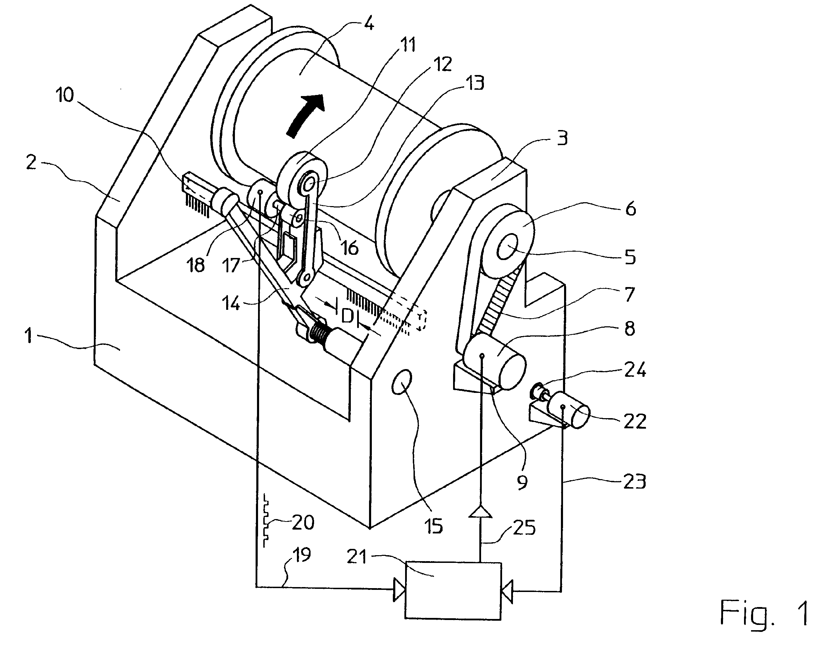

Die Figur 1 zeigt in prinzipieller Darstellung eine bekannte Kettenwirkmaschine mit dem Maschinengestell 1, deren Seitenwände 2 und 3 den Kettbaum 4 tragen.

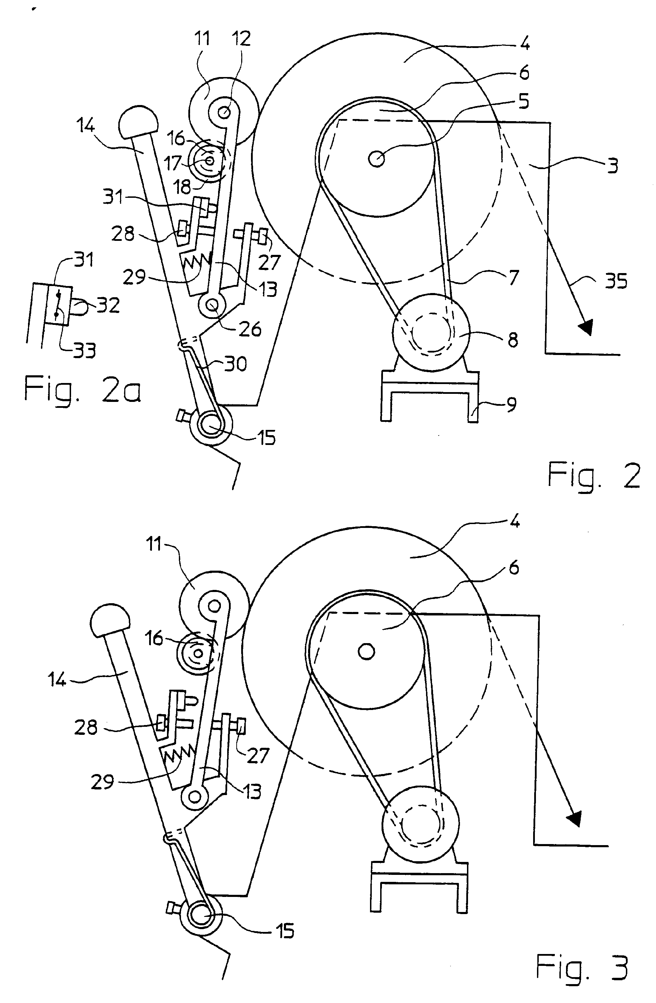

Auf der die Seitenwand 3 durchdringenden Achse 5 des Kettbaumes 4 sitzt die Zahnriemenscheibe 6, die über den Zahnriemen 7 vom Kettbaum-Antriebsmotor 8 angetrieben wird. Der Kettbaum-Antriebsmotor 8 ist über die Konsole 9 an der Seitenwand 3 befestigt. Zwischen den Seitenwänden 2 und 3 erstreckt sich die Legebarre 10, die in bekannter, hier nicht im einzelnen dargestellter Weise von den Seitenwänden 2 und 3 getragen wird. Normalerweise sind Kettenwirkmaschinen mit mehreren Legebarren ausgestattet, worauf jedoch in diesem Zusammenhang nicht eingegangen werden braucht. Die Legebarre 10 kann in bekannter Weise eine in ihrer Längsrichtung verlaufende Versatzbewegung ausführen, die hier durch die Distanz "D" bezeichnet ist. Am Wickel des Kettbaumes 4 liegt die Andrückrolle 11 an, die aufgrund ihrer Reibung gegenüber dem Kettbaum 4 von diesem schlupffrei mitgenommen wird, so daß sich die bei der Drehung des Kettbaumes 4 jeweils zurückgelegte Weglänge der Oberfläche des Kettbaumes 4 in vollem Umfang auf die Andrückrolle 11 überträgt und diese entsprechend mitnimmt. Die Andrückrolle 11 ist auf der Achse 12 drehbar gelagert, die von dem Hebel 13 getragen wird. Der Hebel 13 ist an dem Schwenkarm 14 angelenkt, der seinerseits über die Achse 15 an der Seitenwand 3 gelagert ist. Auf das Zusammenwirken von Hebel 13 und Schwenkarm 14 wird weiter unten im Zusammenhang mit den Figuren 2 bis 4 näher eingegangen. Neben der Andrückrolle 11 ist auf dem Hebel 13 die Antriebsrolle 16 gelagert, die schlupffrei von der als Zwischenrolle wirkenden Andrückrolle 11 mitgenommen wird. Bei Drehung des Kettbaumes 4 nimmt dieser also, wie gesagt, die Andrückrolle 11 mit, die ihrerseits schlupffrei ihre Bewegung auf die Antriebsrolle 16 überträgt, so daß jede von der Oberfläche des Kettbaumes 4 zurückgelegte Wegstrecke voll auf die Antriebsrolle 16 übertragen wird, deren Oberfläche damit die gleiche Länge wie die Oberfläche des Kettbaumes durchläuft. Die Antriebsrolle 16 ist über die Achse 17 mit dem an dem Hebel 13 angebrachten Impulsgenerator 18 verbunden, der demgemäß in Abhängigkeit vom Fortschreiten der Oberfläche des Kettbaumes 4 und damit des Fadenabzugs eine entsprechende Anzahl von Impulsen über die Leitung 19 abgibt. Diese Fadenlängen-Impulse 20 stellen hinsichtlich ihrer Anzahl ein Maß für die vom Kettbaum 4 abgezogene Fadenlänge dar.

Die Fadenlängen-Impulse 20 werden über die Leitung 19 in die Regelschaltung 21 eingespeist, die außerdem in bekannter Weise von dem Impulsgenerator 22 über die Leitung 23 einen Impulszug erhält. Der Impulsgenerator 22 wird über die Hauptwelle 24 der Kettenwirkmaschine angetrieben. Der Antriebsmotor der Kettenwirkmaschine ist hier nicht dargestellt. Aufgrund der der Regelschaltung 21 zugeführten Impulszüge erzeugt die Regelschaltung 21 in bekannter Weise ein über die Leitung 25 abgegebenes Steuersignal, das den Antriebsmotor 8 für den Kettbaum 4 steuert. Durch diese Regelung und Steuerung wird in bekannter Weise je nach Fadenbedarf an den Wirkwerkzeugen, insbesondere der Versatzbewegung der Legebarre 10, die erforderliche Fadenzufuhr durch entsprechende Regelung der Geschwindigkeit des Kettbaumes 4 eingestellt. Die Antriebsrolle 16, die über die Andrückrolle 11 exakt die vom Kettbaum 4 jeweils zurückgelegte Wegstrecke aufnimmt, ist entweder aus hartem Material oder mit gehärteter Oberfläche hergestellt, so daß sie auch über lange Betriebszeiten verschleißfrei von der Andrückrolle 11 mitgenommen wird, ohne daß sich dabei insbesondere durch Abnutzung der Andrückrolle 11 eine Verfälschung der Abgabe der Fadenlängen-Impulse 20 in bezug auf die Verdrehung des Kettbaumes 4 ergeben kann. Auch bei durch Abnutzung sich ergebender Durchmesserverringerung der Andrückrolle 11 gibt die Antriebsrolle 16 mit ihrer Verdrehung stets genau die von der Oberfläche des Kettbaums 4 zurückgelegte Wegstrecke wieder. Dabei muß lediglich in bekannter Weise dafür gesorgt werden, daß auch bei Abnutzung und entsprechender Durchmesserverringerung der Andrückrolle 11 die Antriebsrolle 16 stets an der Andrückrolle 11 anliegt und von dieser schlupffrei mitgenommen wird.

Die Antriebsrolle 16, deren Gestaltung somit unabhängig von Bedingungen der Mitnahme durch die Oberfläche des Kettbaums 4 ist, kann nicht nur aus beliebig hartem Material hergestellt werden, es ist auch möglich, ihr jeden gewünschten Durchmesser zu geben. Dieser Durchmesser der Antriebsrolle 16 ist hier so festgelegt, daß die Fadenlängen-Impulse 20, die bei einer Umdrehung der Antriebsrolle 16 im Effekt gleichmäßig längs des Umfangs der Antriebsrolle 16 erscheinen, jeweils einem Bruchteil einer minimalen Versatzbewegung der Legebarre 10 entsprechen. Wenn z. B. minimale Legungsbewegungen im Bereich von 1 mm möglich sind, so wird zweckmäßig der Umfang der Antriebsrolle 16 durch entsprechende Dimensionierung ihres Durchmessers so gewählt, daß sich bei durch den Impulsgenerator 18 gegebener Zahl von Fadenlängen-Impulsen 20 pro Umdrehung der Antriebsrolle 16 ein Abstand dieser Impulse ergibt, der etwa 0,1 mm vom Kettbaum 4 abgezogener Fadenlänge entspricht. Selbstverständlich ist es auch möglich, aufgrund eines kürzeren Umfangs der Antriebsrolle 16 bzw. geringeren Durchmessers bei gleicher Zahl von Fadenlängen-Impulsen 20 je Umdrehung der Antriebsrolle 16 die Fadenlängen-Impulse 20 näher aneinanderzurücken, was darauf hinausläuft, daß jeder Fadenlängen-Impuls 20 eine kürzere Länge von vom Kettbaum 4 abgezogenen Fäden repräsentiert. Auf diese Weise kann die Genauigkeit der Steuerung der Drehung des Kettbaumes 4 entsprechend erhöht werden, was dann von Bedeutung ist, wenn bei der Versatzbewegung der Legebarre 10 und der durch die Wirkwerkzeuge bewirkten Verarbeitung der Fäden pro Maschenreihe sich jeweils besonders kurze Fadenlängen ergeben, die dann während einer Umdrehung der Hauptwelle 24 zwecks dieser Verarbeitung angepaßter Fadenzuführung mit großer Genauigkeit durch die Regelung der Drehung des Kettbaumes 4 zugeführt werden können.

Es sei nunmehr auf die Figuren 2 bis 4 eingegangen, die die in der Figur 1 dargestellte Vorrichtung mit dem Kettbaum 4 und dem Schwenkarm 14 sowie die daran befestigen Bauteile im einzelnen zeigen.

In der Figur 2 ist ein Ausschnitt aus der Figur 1 in Seitenansicht dargestellt, in der im wesentlichen außer dem Kettbaum 4 mit seinem Antrieb auch der Schwenkarm 14 mit den daran angeordneten Bauteilen dargestellt ist. Figur 2 zeigt die Vorrichtung in der Betriebslage, in der die Andrückrolle 11 an der Oberfläche des Kettbaums 4 anliegt und von diesem mitgenommen wird. Wie bereits anhand der Figur 1 dargelegt, überträgt die Andrückrolle 11 die Drehbewegung auf die Antriebsrolle 16. Andrückrolle 11 und Antriebsrolle 16 sind auf dem Hebel 13 gelagert, der drehbeweglich mittels der Achse 26 an dem Schwenkarm 14 angelenkt ist. Der Hebel 13 kann zwischen den einstellbaren Anschlägen 27 und 28 hin und her gedreht werden, wobei er durch die Feder 29 in Richtung auf den Kettbaum 4 gedrückt wird. Der auf der Achse 15 verschwenkbar gelagerte Schwenkarm 14 wird durch die Feder 30 in Richtung auf den Kettbaum 4 vorgespannt, und zwar derart, daß die Kraft der Feder 30 diejenige der Feder 29 überwindet. In der dargestellten Betriebslage, in der die Andrückrolle 11 am Kettbaum 4 anliegt und von diesem mitgenommen wird, liegt also der Hebel 13 am Anschlag 28 an, wodurch die auf den Kettbaum 4 zu gerichtete mögliche Verschwenkbewegung des Schwenkarms 14 begrenzt ist.

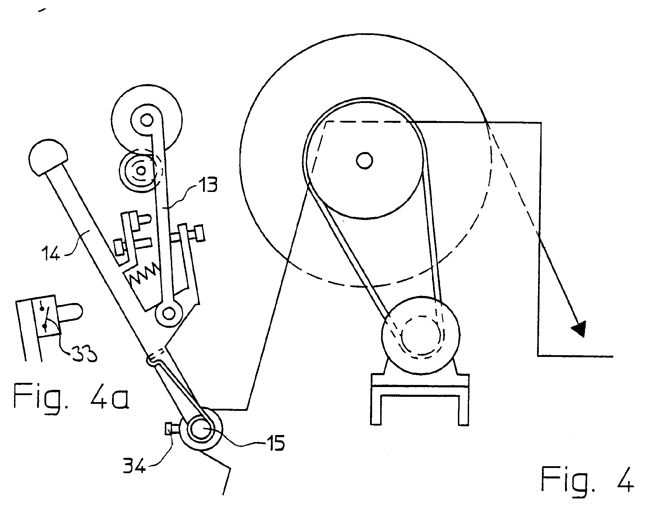

An dem Schwenkarm 14 ist der Endschalter 31 angebracht, dessen Stößel 32 (siehe vergrößerte Darstellung in Figur 2a) durch den Hebel 13 eingeschoben ist und dabei den Kontakt 33 des Endschalters 31 schließt. Das Schließen des Kontaktes 33 kann beispielsweise dazu benutzt werden, die betreffende Kettenwirkmaschine in Betrieb zu setzen und zu halten. Wenn nun aus irgendeinem Grund, insbesondere auch bei ungewollter Betätigung, der Schwenkarm 14 vom Kettbaum 4 weggeschwenkt wird, nimmt der Schwenkarm 14 die in Figur 3 dargestellte Abschaltlage ein, in der unter der Wirkung der Feder 29 der Hebel 13 vom Schwenkarm 14 weggedreht wird, wobei zunächst die Andrückrolle 11 in Berührungskontakt mit dem Kettbaum 4 verbleibt. Diese Verdrehbewegung des Hebels 13 wird schließlich, wie in Figur 3 dargestellt, vom Anschlag 27 begrenzt. Bis zum Erreichen dieser Abschaltstellung, ausgehend von der Betriebsstellung in Figur 2, bleibt die Andrückrolle 11 in Berührungskontakt mit dem Kettbaum 4, so daß also die über die Antriebsrolle 16 bewirkte Erzeugung der Fadenlängen-Impulse 20 zunächst aufrecht erhalten bleibt. Bei der Verdrehbewegung des Hebels 13 vom Anschlag 28 weg wird jedoch der Stößel 32 des Endschalters 31 freigegeben, so daß der Kontakt 33 öffnet (siehe vergrößerte Darstellung in Figur 4a). Damit kann durch diese Öffnung des Kontaktes 33 die Kettenwirkmaschine abgeschaltet werden, während zunächst, wie gesagt, die Andrückrolle 11 noch in Berührungskontakt mit dem Kettbaum 4 verbleibt, so daß sichergestellt ist, daß die von der Audrückrolle 11 und der Antriebsrolle 16 ausgehende Regelung der Fadenzufuhr vor Abschalten der Maschine nicht unterbrochen werden kann.

Wenn dann der Schwenkarm 14 weiter in die in Figur 4 dargestellte Außerbetriebslage verschwenkt wird, gerät die Andrückrollle 11 außer Berührungskontakt zum Kettbaum 4, womit nunmehr auch der Antrieb der Antriebsrolle 11 unterbleibt und die Abgabe der Fadenlängen-Impulse 20 unterbrochen wird.

An der Lagerung der Achse 15 für den Schwenkarm 14 ist der Rastbolzen 34 vorgesehen, mit dem in bekannter Weise der Schwenkarm 14 in der in Figur 4 gezeigten Außerbetriebslage verrastet gehalten wird.

Es sei noch darauf hingewiesen, daß im Falle der Verwendung mehrerer Kettbäume bzw. Legebarren die in den Figuren 2 bis 4 dargestellte Vorrichtung entsprechend mehrfach vorgesehen werden muß, womit der Abzug von Fäden 35 pro Kettbaum individuell geregelt werden kann.

## Patentansprüche

1. Vorrichtung zur digitalen Messung der Fadenlänge der von einem Kettbaum (4) einer Kettenwirkmaschine abgezogenen Fäden (35) mit einer gegen den Wickel des Kettbaumes (4) anliegenden Andrückrolle (11), die einen Impulsgenerator (18) zur Abgabe von Fadenlängen-Impulsen (20) antreibt, deren Anzahl ein Maß für die vom Kettbaum (4) abgezogene Fadenlänge darstellt und die in eine Regelschaltung (21) eingespeist werden, die die Drehung des Kettbaumes (4) steuert, **dadurch gekennzeichnet**, daß der Antrieb des Impulsgenerators (18) direkt von einer Antriebsrolle (16) erfolgt, die unter Ausnutzung der Andrückrolle (11) als Zwischenrolle von dieser schlupffrei mitgenommen wird und mit verschleißfreier Oberfläche und derart vorgegebenem Durchmesser gefertigt ist, daß die über den Umfang der Antriebsrolle (16) gleichmäßig verteilten Fadenlängen-Impulse (20) je eine Fadenlänge repräsentieren, die einem Bruchteil (z. B. 10%) einer minimalen Versatzbewegung der Legebarren (10) der Kettenwirkmaschine entspricht.

2. Vorrichtung nach Anspruch 1, **dadurch gekennzeichnet**, daß die Andrückrolle (11) auf einem an einem Schwenkarm (14) angelenkten, in Richtung auf den Kettbaum (4) vorgespannten Hebel (13) derart gelagert ist, daß die Andrückrolle (11) in ihrem angedrückten Zustand den Hebel (13) vom Kettbaum (4) weg und in ihrem abgehobenen Zustand den Hebel (13) auf den Kettbaum (4) zu verdreht, wobei ein am Schwenkarm (14) angebrachter Endschalter (31) - vom Hebel (13) betätigt - im angedrückten Zustand seine eine Schaltstellung (z. B. geschlossen) und im abgehobenen Zustand seine andere Schaltstellung (z. B. geöffnet) einnimmt, in die der Endschalter (31) beim Wegschwenken des Schwenkarms (14) vom Kettbaum (4) weg während der Drehbewegung des Hebels (13) bei noch am Kettbaum (4) anliegender Andrückrolle (11) gelangt.

## Claims

1. Device for digitally measuring the length of the yarns (35) drawn off from a warp beam (4) of a warp knitting machine, comprising a pressure roller (11) which bears against the package of the warp beam (4) and drives a pulse generator (18) for emitting yarn length pulses (20), the number of which represents a measure of the yarn length drawn off from the warp beam (4) and which are fed to a control circuit (21) which controls the rotation of the warp beam (4), characterised in that the pulse generator (18) is driven directly by a drive roller (16) which is entrained by the latter in a slip-free manner using the pressure roller (11) as an intermediate roller and is produced with a wear-resistant surface and a diameter predetermined in such a manner that the yarn length pulses (20) distributed in a uniform manner over the circumference of the drive roller (16) each represent a yarn length which corresponds to a fraction (e.g. 10 %) of a minimum racking movement of the guide bars (10) of the warp knitting machine.

2. Device according to claim 1, characterised in that the pressure roller (11) is supported on a lever (13) hinged on to a swivel arm (14) and biased towards the warp beam (4) in such a manner that the pressure roller (11) pivots the lever (13) away from the warp beam (4) in its pressed state and pivots the lever (13) towards the warp beam (4) in its lifted state, a limit switch (31) actuated by the lever (13) and mounted on the swivel arm (14) adopting one position (e.g. closed) in the pressed state and another position (e.g. open) in the lifted state, the limit switch (31) arriving at this position when the swivel arm (14) is swivelled away from the warp beam (4) during the rotating movement of the lever (13) while the pressure roller (11) still bears against the warp beam (4).

## Revendications

1. Dispositif de mesure de la longueur des fils (35) déroulés d'une ensouple de tissage (4) d'un métier chaîne comportant un rouleau de pression (11) en appui contre la bobine de l'ensouple (4), qui entraîne une générateur d'impulsions (18) destiné à émettre des impulsions (20) de longueur de fil, dont le nombre représente la longueur de fil déroulée de l'ensouple (4) et est entrée dans un circuit de réglage (21), qui commande la rotation de l'ensouple (4),
caractérisé en ce que l'entraînement du générateur d'impulsions (18) s'opère directement par un rouleau d'entraînement (16), qui, lorsque l'on utilise le rouleau de pression (11) en tant que rouleau intermédiaire, est entraîné sans friction par celui-ci et qui est conçu avec une surface sans usure et d'une diamètre donné tel, que les impulsions (20) de longueur de fil réparties de manière égale sur le pourtour du rouleau d'entraînement (16) représentent chacune une longueur de fil, qui correspond à une fraction (par exemple 10 %) d'un mouvement de décalage minimal des barres à passettes (10) du métier chaîne.

2. Dispositif selon la revendication 1,
caractérisé en ce que le rouleau de pression (11) est supporté sur un levier (13) précontraint, articulé sur le bras pivotant (14), en direction de l'ensouple (4), de manière telle que le rouleau de pression (11) lorsqu'il est en position appuyée, éloigne par rotation le levier (13) de l'ensouple (14), et lorsqu'il est en position dégagée rapproche par rotation le levier (13) de l'ensouple (14), un commutateur de fin de course (31) - actionné par le levier (13) - monté sur le bras pivotant (14) adopte, lors de la position appuyée une position de commutation (par exemple fermé) et, lors de la position dégagée, une autre position de commutation (par exemple ouvert) sur laquelle commute le commutateur de fin de course (31) lors de l'éloignement du bras pivotant (14) de l'ensouple (4) durant la rotation du levier (13) le rouleau (11) étant encore en appui contre l'ensouple (4).
